Europäisches Patentamt

European Patent Office

Office européen des brevets

(19)

(11) Publication number: **0 060 306**

**B1**

(12) **EUROPEAN PATENT SPECIFICATION**

(45) Date of publication of patent specification: **13.08.86**

(51) Int. Cl.⁴: **B 60 K 28/00, G 08 B 21/00**

(21) Application number: **81902603.0**

(22) Date of filing: **21.09.81**

(86) International application number:
**PCT/JP81/00246**

(87) International publication number:
**WO 82/00979 01.04.82 Gazette 82/09**

(54) **SLEEPING DRIVER WARNING DEVICE FOR VEHICLE.**

(30) Priority: **22.09.80 JP 132059/80**

(43) Date of publication of application:
**22.09.82 Bulletin 82/38**

(45) Publication of the grant of the patent:
**13.08.86 Bulletin 86/33**

(84) Designated Contracting States:
**DE FR GB**

(56) References cited:
**DE-A-2 042 853**
**JP-A-55 164 530**
**JP-A-56 002 225**
**JP-A-56 002 226**
**JP-U-55 121 732**
**JP-U-56 073 638**
**US-A-3 222 639**
**US-A-3 227 998**
**US-A-3 654 599**
**US-A-3 794 969**
**US-A-4 007 357**
**US-A-4 017 843**
**US-A-4 104 621**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **SEKO, Yasutoshi**
**2-d, Fujisakaeso, 2781-19, Tomioka-cho**
**Kanazawa-ku, Yokohama-shi, Kanagawa-ken**
**(JP)**
Inventor: **YANAGISHIMA, Takayuki**
**1-7-404, Maborikaigan 4-chome Yokosuka-shi**
**Kanagawa-ken 239 (JP)**

(74) Representative: **Müller, Frithjof E.**
**Patentanwälte Dipl.-Chem. Dr. N. ter Meer**
**Dipl.-Ing. F.E. Müller Dipl.-Ing. H. Steinmeister**
**Mauerkircherstrasse 45**
**D-8000 München 80 (DE)**

Courier Press, Leamington Spa, England.

## Description

The invention relates to a doze warning device including a steering angle detection means for producing a signal representative of the steering angular position, a warning condition detecting means for detecting a preselected specific steering operational behavior on the basis of the steering angular position indicative signal for producing a trigger signal, and warning means responsive to said trigger signal for producing a warning.

Such a device is known from US—A—3,227,998. The device described in that patent is based on the knowledge that each driver has a personal reversal rate of reversing the turning direction of the steering wheel. When the driver is driving too fast, the reversal rate will exceed an upper threshold, whereas, when he becomes drowsy, his reversal rate will drop below a lower threshold. The device is measuring the reversal rate, and it develops a trigger signal to actuate a warning means, when one of the thresholds is exceeded.

A similar device is described in US—A—3,654,599. The device comprises a storing circuit which automatically stores a value related to the normal personal reversal rate of a driver. As normal reversal rate the reversal rate within the first three minutes after the vehicle exceeds for the first time a predetermined speed is stored.

The devices according to US—A—3 227 998 and US—A—3 654 599 detect drowsiness by realizing that an actual reversal rate drops below a normal reversal rate. However, it is also known in the prior art that drowsiness can lead also to an increase of steering frequency and amplitude. These opposite observations may be explained by the fact that during drowsiness a jerking of the muscles of the driver may occur. Also, the driver may be frightened subsonsciously by a sudden blow of wind or by a passing car. All these events lead to an increase of steering frequency. A dozing warning system as known from DE—A—20 42 853 makes use of these mentioned observations. An alarm is developed when the steering frequency is increasing.

It is an object of the invention to provide a method and a doze warning device which are capable to detect a condition of drowsiness which results in a sudden increase of abrupt changes of the steering angle in both steering directions.

The doze warning device according to the invention comprises the features as mentioned in the first paragraph of the description and, additionally, comprises in accordance with the invention, in the warning condition detecting means a first abrupt steering detection means for detecting steering angular variations in a first direction at a rate exceeding a predetermined value to produce a first abrupt steering signal, a second abrupt steering detection means for detecting steering angular variations in a second direction at a rate exceeding a predetermined value to produce a second abrupt steering signal, and a trigger signal generating means responsive to said abrupt steering signals for producing said trigger signal when said first and second abrupt steering signals are developed within a predetermined period of time.

As the system is measuring whether abrupt steering in alternating directions is made within a short period of time, it is able to detect steering operations that are caused by jerking muscles in a drowsy state of the driver.

The invention also relates to a method for warning a dozing driver as defined in claim 6.

Embodiments of the invention will be described herebelow with reference to the accompanying drawings.

Brief description of the drawings

Fig. 1 is a block diagram of a preferred embodiment of a dozing warning device of the present invention;

Fig. 2 is a timechart for the dozing warning device of Fig. 1;

Figs. 3A and 3B are schematic block diagrams of examples of abrupt steering detection circuits;

Figs. 4 and 5 are block diagrams of other modifications of the abrupt steering detection circuit;

Fig. 6 is block diagram of another embodiment of the dozing warning device of the invention.

Description of the preferred embodiments

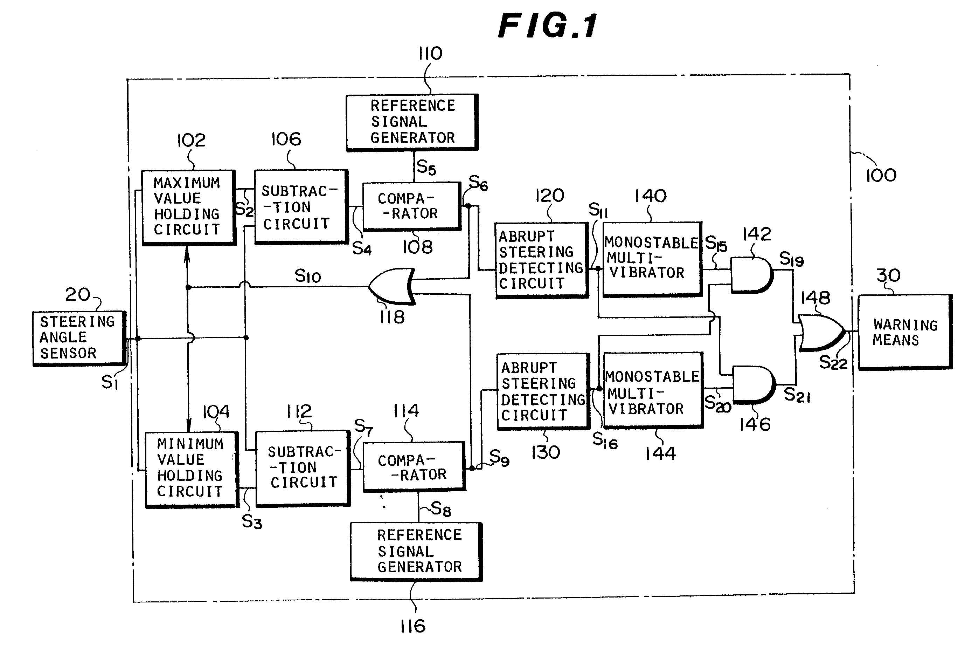

The preferred embodiment of the present invention will be described herebelow with reference to the accompanying drawings. Fig. 1 shows a block diagram of the preferred embodiment of a dozing warning device of the invention, in which a steering angle sensor 20 continuously monitors a steering angle corresponding to rotational operation of a steering wheel (not shown). The steering angle sensor 20 sequentially produces a sensor signal $S_1$ having a variable value corresponding to variations in the steering angle. For example, the steering angle sensor comprises a variable resistor attenuating a signal value proportionally with respect to the angular position of the steering column (not shown), or a signal generator which produces a pulse in response to a predetermined change in steering angle and a counter for counting the pulses and producing a signal having a value proportional to the counted value. In brief, the steering angle sensor can comprise any appropriate device.

The sensor signal $S_1$ from the steering angle sensor 20 is imputted to a dozing detecting circuit 100. The dozing detecting circuit 100 has a maximum value holding circuit 102 for holding the maximum value of the sensor signal $S_1$ and a minimum value holding circuit 104 for holding the minimum value of the sensor signal. The maximum value holding circuit 102 is continuously updated by the sensor signal $S_1$ and produces a maximum value signal $S_2$ representative of the value held therein. Similar to the maximum value holding circuit 102, the minimum value holding circuit 104 is regularly updated by the sensor signal $S_1$ and produces a minimum value signal $S_3$ representative of the value held therein. The maximum value signal $S_2$ from the maximum value holding circuit 102 is inputted to one of the input terminals of a subtraction circuit 106. To the other input terminal of the subtraction circuit 106, the steering angle sensor 20 is directly connected to continuously input the sensor signal $S_1$. The subtraction circuit 106 performs a subtraction operation to obtain the difference between the signal values of the sensor signal $S_1$ and the maximum value signal $S_2$. The subtraction circuit 106 continuously outputs an output $S_4$ representative of the obtained signal value difference. The output $S_4$ of the subtraction circuit 106 is inputted to a comparator 108. The comparator 108 is connected to a reference signal generator 110 which produces a reference signal $S_5$ having a predetermined constant value. The comparator 108 compares the values of the output $S_4$ of the subtraction circuit and the reference signal $S_5$ to produce an output $S_6$ when the value of output $S_4$ is equal to or greater than that of the reference signal $S_5$.

Similarly, the minimum value signal $S_3$ of the minimum value holding circuit 104 is inputted to a subtraction circuit 112. The subtraction circuit 112 receives the sensor signal $S_1$ of the steering angle sensor 20 similar to the aforementioned subtraction circuit 106. The subtraction circuit 112 performs a subtraction operation to obtain the difference between the signal values of the minimum value signal $S_3$ and the sensor signal $S_1$ to produce an output $S_7$ representative of the obtained difference. The output $S_7$ of the subtraction circuit 112 is fed to a comparator 114 to be compared with a reference signal $S_8$ fed from a reference signal generator 116. The comparator 114 produces an output $S_9$ when the value of the output $S_7$ is equal to or greater than that of the reference signal $S_8$.

It should be noted that the comparators 108 and 114 are both adapted to produce pulse-form outputs whenever the output values of the subtraction circuits 106 and 112 exceed the corresponding reference values.

The outputs $S_6$ and $S_9$ of the comparators 108 and 114 are inputted to an OR gate 118. The OR gate 118 produces a gate output $S_{10}$ whenever either or both of the outputs $S_6$ and $S_9$ of the comparators 108 and 114 are inputted. The gate output $S_{10}$ serves as a reset signal for the foregoing maximum value holding circuit 102 and the minimum value holding circuit 103. The gate output $S_{10}$ is inputted to the maximum value holding circuit 102 and the minimum value holding circuit 103 to clear the values held therein and to replace the values held therein with the value of the sensor signal $S_1$.

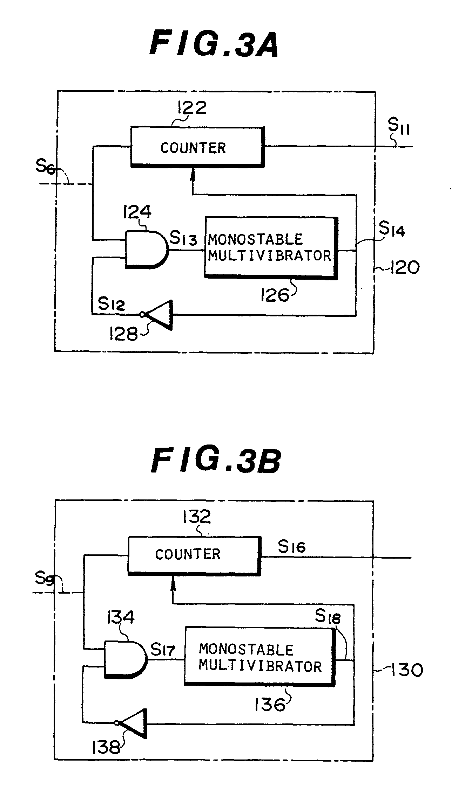

The output $S_6$ of the comparator 108 is inputted to an abrupt steering detecting circuit 120 simultaneous with being inputted to the OR gate 118. As shown in Fig. 3A, the abrupt steering detecting circuit 120 comprises a counter 122, an AND gate 124, a monostable multivibrator 126 and an invertor 128. The counter 122 counts the output pulses $S_6$ of the comparator 108 to produce an abrupt steering signal $S_{11}$ when the counter value reaches a predetermined value. In addition, the output $S_6$ of the comparator 108 is inputted to the AND gate 124. The AND gate 124 receives high level signal $S_{12}$ via the invertor 128 when the monostable multivibrator 126 is maintained OFF. The AND gate 124 produces a gate output $S_{13}$ in response to the comparator output $S_6$ only in conjunction with a high-level signal $S_{12}$. The monostable multivibrator 126 is turned on in response to the gate output $S_{13}$ to output a high-level signal $S_{14}$ for a given period of time. The output $S_{14}$ of the monostable multivibrator 126 is inputted to the counter 122 to make the counter operative. That is, the counter 122 counts the comparator output pulses $S_6$ during the period in which the monostable multivibrator 126 outputs the high-level signal $S_{14}$. When the high-level signal $S_{14}$ of the monostable multivibrator 126 is inputted to the invertor 128, the output $S_{12}$ of the invertor goes to a low level. Thereby, the AND gate 124 becomes inoperative and remains inoperative as long as the high-level signal $S_{14}$ from the monostable multivibrator 126 is present. The abrupt steering signal $S_{11}$ of the counter of abrupt steering detecting circuit 120 is inputted to a monostable multivibrator 140 to turn the latter ON for a predetermined period of time. The monostable multivibrator 140 produces an output $S_{15}$ while it remains ON. The output $S_{15}$ of the monostable multivibrator 140 is fed to one of the input terminals of an AND gate 142. The other input terminal of the AND gate 142 is connected to an abrupt steering detecting circuit 130. The AND gate 142 produces an output in response to an abrupt steering signal $S_{16}$ from the abrupt steering detecting circuit 130 only in conjunction with the output $S_{15}$ of the monostable multivibrator 140.

Identically to the aforementioned abrupt steering detecting circuit 120, the abrupt steering detecting circuit 130 comprises a counter 132, an AND gate 134, a monostable multivibrator 136 and an invertor 138, as shown in Fig. 3B. The AND gate 134 produces a gate output $S_{17}$ when the monostable multivibrator 136 is OFF and the output $S_9$ of the comparator 114 is received. The monostable multivibrator 136 is responsive to the gate output $S_{17}$ to turn ON to produce an output $S_{18}$ for a predetermined period of time. The counter 132 becomes operative while the output $S_{18}$ of the monostable multivibrator 136 is outputted. The counter 132 counts the output pulses $S_9$ fed from the comparator 114 while it is operative. The counter 132 produces an abrupt steering signal $S_{16}$ when the counter value reaches a predetermined value. In addition, the output $S_{18}$ of the monostable multivibrator 136 is inverted by the invertor 138 and then inputted to the AND gate 136 to make the latter inoperative.

The abrupt steering signal $S_{16}$ from the counter 132 of the abrupt steering detecting circuit 130 is inputted to the AND gate 142 together with the

output $S_{15}$ of the monostable multivibrator 140 to produce a gate output $S_{19}$. At the same time, the abrupt steering signal $S_{16}$ is inputted to a monostable multivibrator 144. The monostable multivibrator 144 is responsive to the abrupt steering signal $S_{16}$ to produce an output $S_{20}$. The output $S_{20}$ of the monostable multivibrator 144 is inputted to one of the input terminals of an AND gate 146. The other input terminal of the AND gate 146 receives the abrupt steering signal $S_{11}$ of the abrupt steering detecting circuit 120. The AND gate 146 produces a gate output $S_{21}$ when both the output $S_{20}$ of the monostable multivibrator 144 and the abrupt steering signal $S_{11}$ from the abrupt steering detecting circuit 120 are received.

An OR gate 148 is responsive to the gate output $S_{19}$ of the AND gate 142 and/or the gate output $S_{21}$ of the AND gate 146 to produce an output $S_{22}$. The output $S_{22}$ serves as a warning signal for activating a warning means 30 for producing a warning . Warning means 30 can be any of many existing devices, such as a means for producing visible warnings such as a lamp or display, a means for giving an audible warning such as buzzer, warning voice or any other appropriate means for waking the driver.

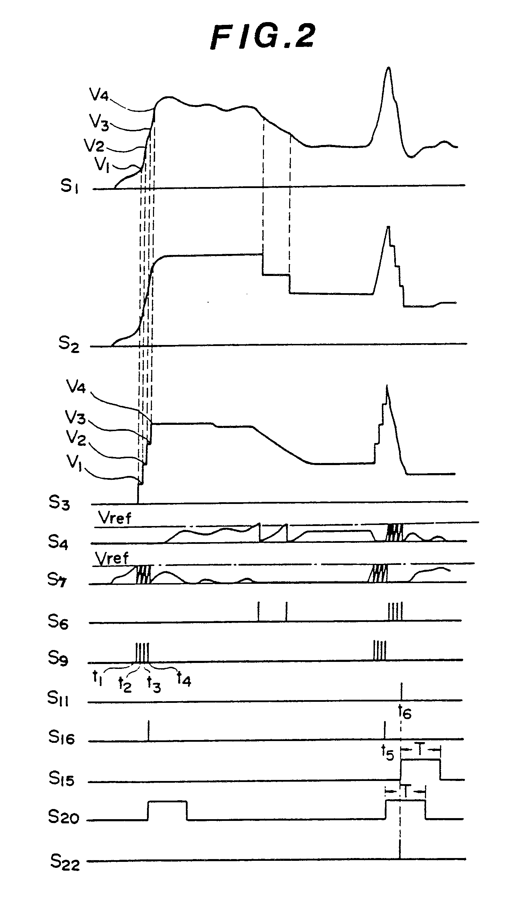

The operation of the above-described device will be illustrated herebelow with reference to the timing chart of Fig. 2. The sensor signal $S_1$ from the steering angle sensor 20 is inputted to the maximum value holding circuit 102 and the minimum value holding circuit 104. The maximum value holding circuit 102 and the minimum value holding circuit 104 are updated by the sensor signal when the gate output $S_{10}$ of the OR gate 118 is produced in response to the outputs $S_6$ and/or $S_9$ of the comparators 108 and 114. When updating is indicated by the gate output $S_{10}$, the maximum value holding circuit 102 and the minimum value holding circuit 104 replace the held values thereof with the sensor signal value. That is, in Fig. 2, at times $t_1$, $t_2$, $t_3$, and $t_4$, the difference $S_7$ between the held value $S_3$ of the minimum value holding circuit 114 and the value of the sensor signal $S_1$ becomes equal to or greater than the reference signal $S_8$ and, thus, the comparator 114 produces the output $S_9$. The OR gate 118 produces the gate output $S_{10}$ whenever it receives the comparator output $S_9$. In turn, the held values of the maximum value holding circuit 102 and the minimum value holding circuit 104 are cleared. At this time since the sensor signal value is increasing, the held value of the maximum value holding circuit 102 is replaced with the value of the sensor signal $S_1$ after being cleared. On the other hand, the minimum value holding circuit 104 holds signal values $v_1$, $v_2$, $v_3$ and $v_4$ as minimum values at times $t_1$, $t_2$, $t_3$ and $t_4$ at which the held value is updated.

The maximum value holding circuit 102 and the minimum value holding circuit 104 produce the maximum value signal $S_2$ and the minimum value signal $S_3$ respectively representative of the held values thereof and feed them to respective subtraction circuits 106 and 112. The subtraction circuits 106 and 112 calculate the differences between the value of sensor signal $S_1$ and the values of maximum value signal $S_2$ and minimum value signal $S_3$ to produce outputs $S_4$ and $S_7$ respectively representative of the obtained differences. The values of the outputs $S_4$ and $S_7$ are compared with the value $V_{ref}$ of the reference signals $S_5$ and $S_8$ by the comparators 108 and 114. The comparators 108 and 114 produce outputs $S_6$ and $S_9$ when the values of the subtraction circuit outputs $S_4$ and $S_7$ respectively exceed the reference value $V_{ref}$. The comparator outputs $S_6$ and $S_9$ are respectively inputted to the abrupt steering detecting circuits 120 and 130.

The abrupt steering detecting circuits 120 and 130 count the pulses of the comparator outputs $S_6$ and $S_9$ within a predetermined fixed period defined by the monostable multivibrators 126 and 136 respectively. The counters 122 and 132 produce the outputs $S_{11}$ and $S_{16}$ when the counter values thereof exceed the predetermined value. In response to the counter outputs $S_{11}$ and $S_{16}$, the monostable multivibrators 140 and 144 turn ON for a constant period of time T to input the outputs $S_{15}$ and $S_{20}$ respectively to the AND gates 142 and 146. In Fig. 2, the counter 132 of the abrupt steering detecting circuit 130 outputs the output $S_{16}$ at the time $t_5$. Thus, the monostable multivibrator 144 turns on at the time $t_5$ for the constant period of time T. At the time $t_6$ which is within the period T of time $t_5$, the counter 122 of the abrupt steering detecting circuit 120 outputs the output $S_{11}$. Both of the signals $S_{11}$ and $S_{20}$ are received by the AND gate 146 to produce gate output $S_{21}$. Thus, the OR gate 148 produces the warning signal $S_{22}$ to activate the warning means to give warning.

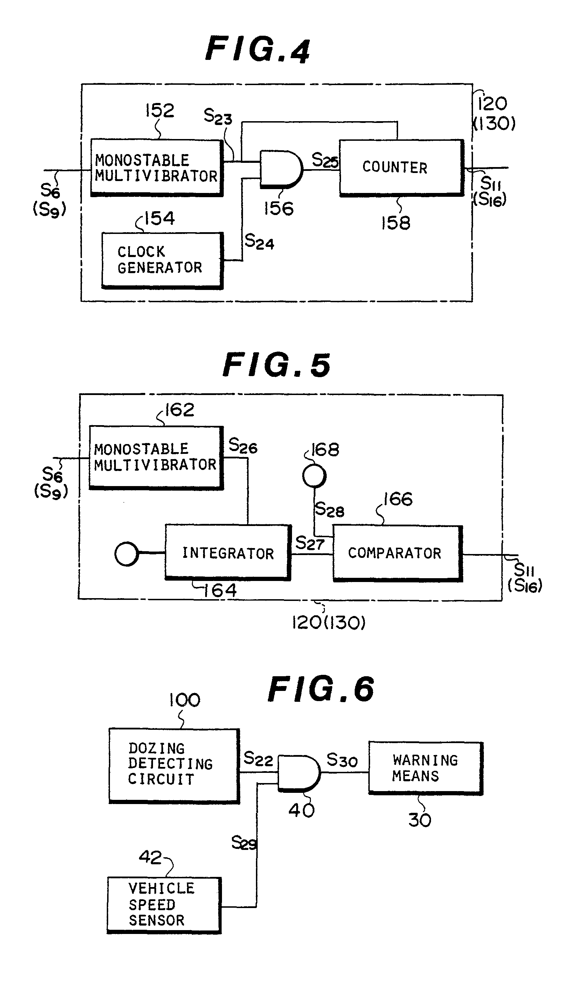

Fig. 4 is another embodiment of the abrupt steering detecting circuit 120, 130 of Fig. 1. The abrupt steering detecting circuit of this embodiment comprises a monostable multivibrator 152 responsive to the comparator outputs $S_6$ or $S_9$ to turn ON to produce an output $S_{23}$ for a given period of time, a clock generator 154 for producing clock pulses $S_{24}$, an AND gate 156 for producing an output $S_{25}$ when the AND condition of the outputs $S_{23}$ and $S_{24}$ is established and a counter 158 which counts the pulses $S_{25}$ from the AND gate 156 and outputs either the output $S_{11}$ or the output $S_{16}$ respectively when the counter value reaches a predetermined value. The counter 158 is reset by the falling edge of the output $S_{23}$ of the monostable multivibrator 152 when the latter turns OFF. In this embodiment, if the comparator outputs $S_6$ or $S_9$ are reinputted when the monostable multivibrator 152 is already ON, the measurement of the predetermined period is renewed and therefore the ON period of the monostable multivibrator 152 is prolonged. The total length of the prolonged period is measured by the clock pulse count.

Fig. 5 shows a further embodiment of the abrupt steering detecting circuit of Fig. 1. The abrupt steering detecting circuit of this embodiment comprises a monostable multivibrator 162, an integrator 164 and comparator 166. The monostable multivibrator 162 is responsive to the output $S_6$ ($S_9$) of the comparator 108 (114) to turn ON for a predetermined period of time to produce an output $S_{26}$. The output $S_{26}$ of the monostable multivibrator 162 is integrated by the integrator 164. The result of integration is fed to the comparator 166 as integrator output $S_{27}$. The comparator 166 compares the integrator output $S_{27}$ with a reference signal $S_{28}$ fed from the reference signal generator 168. The comparator 166 produces the output $S_{11}$ ($S_{16}$) when the integrator output $S_{27}$ exceeds the reference signal $S_{28}$.

It should be noted that the dozing warning device of the present invention can be embodied various ways other than as described. Also, the embodiments given hereabove can be modified in many ways. For example, it is possible to add other warning conditions. Fig. 6 shows a modification of the embodiment of Fig. 1, in which vehicle speed is used as an additional warning condition. In this modification, the dozing detecting circuit 100 is connected to the warning means 30 via an AND gate 40. The other input terminal of the AND gate 40 is connected to a vehicle speed sensor 42. The vehicle speed sensor 42 detects the vehicle speed and produces a vehicle speed signal $S_{29}$ when the detected vehicle speed is higher than a given speed. The AND gate 40 produces an output when the AND condition of the vehicle speed signal $S_{29}$ of the vehicle speed sensor 42 and the warning signal $S_{22}$ of the dozing detecting circuit 100 is established, to operate the warning means.

As explained hereabove, the present invention fulfills all of the objects sought therefor.

**Claims**

1. A doze warning device including a steering angle detecting means (20) for producing a signal ($S_1$) representative of the steering angular position, a warning condition detecting means (120, 130) for detecting a preselected specific steering operational behaviour on the basis of the steering angular position indicative signal ($S_1$) for producing a trigger signal ($S_{22}$), and warning means (30) responsive to said trigger signal for producing a warning, characterized in that said warning condition detecting means comprises a first abrupt steering detection means (120) for detecting steering angular variations in a first direction at a rate exceeding a predetermined value to produce a first abrupt steering signal ($S_{11}$), a second abrupt steering detection means (130) for detecting steering angular variations in a second direction at a rate exceeding a predetermined value to produce a second abrupt steering signal ($S_{16}$), and a trigger signal generating means (142, 146) responsive to said abrupt steering signals for producing said trigger signal when said first and second abrupt steering signals ($S_{11}$, $S_{16}$) are developed within a predetermined period of time (T).

2. A device as set forth in claim 1, characterized in that said abrupt steering detecting means (120), each comprise a circuit (102, 108; 104, 114) for producing steering angle variation pulses ($S_6$, $S_9$) when the change of the value of the signal ($S_1$) representative of the steering angular position exceeds a given value, and a counter (122, 132) for counting the steering angle variation pulses to produce said abrupt steering pulse ($S_{11}$ or $S_{16}$, respectively) when the counter value exceeds a predetermined value.

3. A device as set forth in claim 2, characterized in that said each of said circuits producing one of said steering angle variation pulses ($S_6$, $S_9$) comprises a holding circuit (102, 104) for storing maximum and minimum values of the signal indicative of the steering angle variation and a comparator (108, 114) for comparing the stored value in said holding circuit with the current signal value of the current steering angle signal to produce one of said steering angle variation pulses ($S_6$, $S_9$) when the difference between the signal values exceeds a predetermined value and to reset the stored value in said holding circuits.

4. A device as set forth in claim 1 or 2, characterized in that each of said abrupt steering detecting means (120, 130) comprises a time setting means (152; 162) of a preset period of time for continuing measurement of time whenever the steering angle variation in one direction exceeds a predetermined value within said preset period and means for producing said abrupt steering signal ($S_{11}$ or $S_{16}$, respectively) when the measured period exceeds a predetermined period (Fig. 4, 5).

5. A device as set forth in one of the claims 1 to 4, characterized by an AND gate (40) having its output connected to said warning means (30) and receiving said trigger signal ($S_{22}$) and a vehicle speed signal ($S_{29}$) from a vehicle speed sensor (42) when the vehicle speed is higher than a predetermined speed (Fig. 6).

6. A method for warning a dozing driver, comprising the steps of

(a) detecting the steering angular position and producing a signal ($S_1$) representative of the steering angular position,

(b) detecting a preselected specific steering operational behaviour on the basis of the steering angular position indicative signal ($S_1$) for producing a trigger signal ($S_{22}$) and

(c) producing a warning responsive to said trigger signal ($S_{22}$) characterized by the further steps of

(d) detecting abrupt steering angle variations in first and second directions;

(e) comparing each of said detected steering angle variations with a predetermined value,

(f) measuring the interval between the times when the steering angle variation in the first direction exceeds said predetermined value and the steering angle variation in the second direction exceeds said predetermined value;

(g) comparing the measured interval with a predetermined interval (r); and

(h) producing said warning when the measured interval is shorter than the predetermined interval.

7. The method as set forth in claim 6, characterized by the steps of detecting whether the vehicle speed exceeds a predetermined speed and producing the warning when the vehicle speed is higher than the predetermined speed and the steering angle variations in both of said first and second directions exceed the predetermined value within the predetermined period (T).

**Patentansprüche**

1. Warneinrichtung für den einschlafenden Fahrer eines Fahrzeugs, mit
—einer den Lenkwinkel erfassenden Einrichtung (20) zur Erzeugung eines der Lenkwinkelposition entsprechenden Signals ($S_1$),
—einer Warnzustands - Detektoreinrichtung (120, 130) zur Erfassung eines vorgewählten spezifischen Lenkverhaltens anhand des die Lenkwinkelposition angebenden Signals ($S_1$) und zur Erzeugung eines Triggersignals ($S_{22}$), sowie
—einer auf das Triggersignal ($S_{22}$) ansprechenden Warneinrichtung (30) zur Erzeugung eines Warnsignals, dadurch gekennzeichnet, daß die Warnzustands - Detektoreinrichtung
—eine erste abrupte Lenkbewegungen erfassende Detektoreinrichtung (120) zur Ermittlung von Lenkwinkeländerungen in einer ersten Richtung und bei einer einen vorbestimmten Wert überschreitenden Rate zwecks Erzeugung eines ersten Lenksignals ($S_{11}$) bei einer abrupten Lenkung,
—eine zweite abrupte Lenkbewegungen erfassende Detektoreinrichtung (130) zur Ermittlung von Lenkwinkeländerungen in einer zweiten Richtung und bei einer einen vorbestimmten Wert überschreitenden Rate zwecks Erzeugung eines zweiten Lenksignals ($S_{16}$) bei einer abrupten Lenkung, und
—eine ein Triggersignal erzeugende und auf die Lenksignale bei abrupter Lenkung ansprechende Einrichtung (142, 146) zur Erzeugung des Triggersignals enthält, wenn das erste und das zweite Lenksignal ($S_{11}$, $S_{16}$) innerhalb einer vorbestimmten Zeitperiode (T) auftreten.

2. Warneinrichtung nach Anspruch 1, dadurch gekennzeichnet, daß die abrupte Lenkbewegungen erfassenden Detektoreinrichtungen (120, 130) jeweils eine Schaltung (102, 108; 104, 114) aufweisen, durch die Lenkwinkeländerungspulse ($S_6$, $S_9$) erzeugt werden, wenn die Änderung des Wertes des Signals ($S_1$), das die Lenkwinkelposition angibt, einen gegebenen Wert überschreitet, sowie jeweils einen Zähler (122, 132) zur Zählung der Lenkwinkeländerungspulse ($S_6$, $S_9$) enthalten, um die abrupten Lenkpulse (Lenksignale $S_{11}$, $S_{16}$) zu erzeugen, wenn der Zählwert einen vorbestimmten Wert überschreitet.

3. Warneinrichtung nach Anspruch 2, dadurch gekennzeichnet, daß jede der genannten Schaltungen zur Erzeugung der Lenkwinkelländer-ungspulse ($S_6$, $S_9$) eine Halteschaltung (102, 104) zur Speicherung des Maximalwertes und des Minimalwertes desjenigen Signals enthält, das auf die Lenkwinkeländerungen hinweist, sowie einen Komparator (108, 114) zum Vergleich des gespeicherten Wertes in der Halteschaltung mit dem momentanen Signalwert des gerade vorhandenen Lenkwinkelsignals aufweist, um Lenkwinkeländerungspulse ($S_6$ oder $S_9$) zu erzeugen, wenn die Differenz zwischen den Signalwerten einen vorgegebenen Wert überschreitet, und um die gespeicherten Werte in den Halteschaltungen zurückzusetzen.

4. Warneinrichtung nach Anspruch 1 oder 2, dadurch gekennzeichnet, daß jede der abrupte Lenkbewegungen erfassenden Detektoreinrichtungen (120, 130) eine Zeiteinstelleinrichtung (152; 162) mit voreingestellter Zeitperiode enthält, um eine fortdauernde Zeitmessung immer dann durchzuführen, wenn die Lenkwinkeländerung in einer Richtung einen vorgegebenen Wert innerhalb der voreingestellten Periode überschreitet, sowie eine Einrichtung zur Erzeugung der Lenksignale ($S_{11}$, $S_{16}$) bei abrupter Lenkung aufweist, wenn die gemessene Periode eine vorbestimmte Periode überschreitet (Fig. 4, 5).

5. Warneinrichtung nach einem der Ansprüche 1 bis 4, gekennzeichnet durch ein UND-Gatter (40), dessen Ausgang mit der Warneinrichtung (30) verbunden ist, und das das Triggersignal ($S_{22}$) sowie ein Fahrzeuggeschwindigkeitssignal ($S_{29}$) von einem Fahrzeuggeschwindigkeitssensor (42) empfängt, wenn die Fahrzeuggeschwindigkeit größer als eine vorgegebene Geschwindigkeit ist (Fig. 6).

6. Verfahren zur Warnung des einschlafenden Fahrers eines Fahrzeugs, mit folgenden Schritten:
a) Ermittlung der Lenkwinkelposition und Erzeugung eines der Lenkwinkelposition entsprechenden Signals ($S_1$),
b) Erfassung eines vorgewählten Lenkwinkelverhaltens anhand des die Lenkwinkelposition angebenden Signals ($S_1$) zwecks Erzeugung eines Triggersignals ($S_{22}$), und
c) Bildung eines Warnsignals in Abhängigkeit des Triggersignals ($S_{22}$), gekennzeichnet durch die weiteren Schritte:
d) Erfassung abrupter Lenkwinkeländerungen in einer ersten und einer zweiten Richtung,
e) Vergleich jeder de erfaßten Lenkwinkeländerungen mit einem vorbestimmten Wert,
f) Messung des Zeitintervalls zwischen dem Zeitpunkt, an dem die Lenkwinkeländerung in der ersten Richtung den vorbestimmten Wert überschreitet, und dem Zeitpunkt, an dem die Lenkwinkeländerung in der zweiten Richtung den vorbestimmten Wert überschreitet,
g) Vergleich des gemessenen Intervalls mit einem vorbestimmten Intervall (r), und
h) Bildung des Warnsignals, wenn das gemessene Intervall kleiner als das vorbestimmte Intervall ist.

7. Verfahren nach Anspruch 6, gekennzeichnet durch die weiteren Schritte:

—Überprüfung, ob die Fahrzeuggeschwindigkeit einen vorbestimmten Geschwindigkeitswert überschreitet, und

—Bildung des Warnsignals, wenn die Fahrzeuggeschwindigkeit größer als die vorbestimmte Geschwindigkeit ist und die Lenkwinkeländerungen sowohl in der ersten als auch in der zweiten Richtung des vorbestimmten Wert innerhalb der vorbestimmten Zeitperiode (T) überschreiten.

**Revendications**

1. Dispositif d'alarme en cas de somnolence comprenant un moyen (20) de détection de l'angle de direction pour produire un signal ($S_1$) représentatif de la position angulaire de la direction, un moyen (120, 130) de détection de condition d'alarme pour détecter un comportement opérationnel spécifique présélectionné de direction sur la base du signal ($S_1$) indiquant la position angulaire de la direction pour produire un signal de déclenchement ($S_{22}$), et un moyen d'alarme (30) répondant audit signal de déclenchement pour produire une alarme caractérisé en ce que ledit moyen de détection de condition d'alarme comprend un premier moyen (120) de détection de changement brusque de direction pour détecter des variations angulaires de la direction dns un premier sens à une allure dépassant une valeur prédéterminée pour produire un premier signal de changement brusque de direction ($S_{11}$), un second moyen (130) de détection de changement brusque de direction pour détecter des variations angulaires de la direction dans un second sens à une allure dépassant une valeur prédéterminée et produire un second signal ($S_{16}$) de changement brusque de direction, et un moyen générateur (142, 146) de signaux de déclenchement répondant auxdits signaux de changement brusque de direction pour produire ledit signal de déclenchement lorsque lesdits premier et second signaux de changement brusque de direction ($S_{11}$, $S_{16}$) sont développés pendant une période prédéterminée de temps (T).

2. Dispositif selon la revendication 1 caractérisé en ce que chaque moyen de détection de changement brusque de direction (120, 130) comprend un circuit (102, 108; 104, 114) pour produire des impulsions de variation d'angle de direction ($S_6$, $S_9$) lorsque le changement de la valeur du signal ($S_1$) représentatif de la position angulaire de la direction dépasse une valeur donnée, et un compteur (122, 132) pour compter les impulsions de variation d'angle de direction et produire ladite impulsion de changement brusque de direction ($S_{11}$ ou $S_{16}$ respectivement) lorsque la valeur du compteur dépasse une valeur prédéterminée.

3. Dispositif selon la revendication 2 caractérisé en ce que chacun des circuits produisant l'une des impulsions de variation d'angle de direction ($S_6$, $S_9$) comprend un circuit de maintien (102, 104) pour stocker les valeur maximale et minimale du signal indiquant la variation d'angle de direction et un comparateur (108, 114) pour comparer le valeur stockée dans ledit circuit de maintien à la valeur courante du signal du signal courant d'angle de direction et produire l'une desdites impulsions de variation d'angle de direction ($S_6$, $S_9$) lorsque la différence entre les valeurs du signal dépasse une valeur prédéterminée et pour remettre la valeur stockée à zéro dans lesdits circuits de maintien.

4. Dispositif selon la revendication 1 ou 2 caractérisé en ce que chacun des moyens de détection de changement brusque de direction (120, 130) comprend un moyen d'ajustement du temps (152; 162) d'une période préétablie de temps pour continuer la mesure du temps à chaque fois que la variation de l'angle de direction dans un sens dépasse une valeur prédéterminée pendant ladite période préétablie et un moyen pour produire ledit signal de changement brusque de direction ($S_{11}$ ou $S_{16}$ respectivement) lorsque la période mesurée dépasse une période prédéterminée (figures 4, 5).

5. Dispositif selon l'une quelconque des revendications 1 à 4 caractérisé par une porte ET (40) dont la sortie est reliée audit moyen d'alarme (30) et recevant ledit signal de déclenchement ($S_{22}$) et un signal ($S_{29}$) de vitesse du véhicule d'un capteur (42) de la vitesse du véhicule lorsque la vitesse du véhicule est supérieure à une vitesse prédéterminée (figure 6).

6. Procédé pour alarmer un conducteur somnolent comprenant les étapes de:

(a) détecter la position angulaire de la direction et produire un signal ($S_1$) représentatif de la position angulaire de la direction,

(b) détecter un comportement opérationnel spécifique présélectionné de direction sur la base du signal ($S_1$) indiquant la position angulaire de la direction pour produire un signal de déclenchement ($S_{22}$) et

(c) produire une alarme en réponse audit signal de déclenchement ($S_{22}$) caractérisé par les autres étapes de

(d) détecter des variations brusques de l'angle de direction dans des premier et second sens;

(e) comparer chacune des variations détectées d'angle de direction à une valeur prédéterminée,

(f) mesurer l'intervalle entre les moments où la variation d'angle de direction dans le premier sens dépasse ladite valeur prédéterminée et la variation de l'angle de direction dans le second sens dépasse ladite valeur prédéterminée;

(g) comparer l'intervalle mesuré à un intervalle prédéterminé (r); et

(h) produire l'alarme lorsque l'intervalle mesuré est plus court que l'intervalle prédéterminé.

7. Procédé selon la revendication 6 caractérisé par les étapes de détecter à chaque fois que la vitesse du véhicule dépasse une vitesse prédéterminée et de produire l'alarme lorsque la vitesse du véhicule est supérieure à la vitesse prédéterminée et que les variations d'angle de direction dans lesdits premier et second sens dépassent la valeur prédéterminée pendant la période prédéterminée (T).

**FIG.1**

# FIG.2

# FIG.3A

122
COUNTER
$S_{11}$
$S_6$
124
$S_{13}$
MONOSTABLE MULTIVIBRATOR
$S_{14}$
120
126
$S_{12}$
128

# FIG.3B

132
COUNTER
$S_{16}$
$S_9$
134
$S_{17}$
MONOSTABLE MULTIVIBRATOR
$S_{18}$
130
136
138

3

# FIG.4

MONOSTABLE MULTIVIBRATOR

152

S23

156

S25

COUNTER

158

120 (130)

S6 (S9)

CLOCK GENERATOR

154

S24

S11 (S16)

# FIG.5

MONOSTABLE MULTIVIBRATOR

162

S26

168

S28

COMPARATOR

166

S6 (S9)

INTEGRATOR

164

S27

S11 (S16)

120(130)

# FIG.6

100

DOZING DETECTING CIRCUIT

S22

40

S30

WARNING MEANS

30

S29

42

VEHICLE SPEED SENSOR

4